Europäisches Patentamt

European Patent Office

Office européen des brevets

(11) Publication number: **0 098 048**
A1

## (12) EUROPEAN PATENT APPLICATION

(21) Application number: 83303062.0

(22) Date of filing: 27.05.83

(51) Int. Cl.³: **G 02 B 27/14**
//A24C5/60

(30) Priority: 25.06.82 US 349659

(43) Date of publication of application:
11.01.84 Bulletin 84/2

(84) Designated Contracting States:
CH DE GB LI NL

(71) Applicant: PHILIP MORRIS INCORPORATED
120 Park Avenue
New York, New York 10017(US)

(72) Inventor: Martin, Peter
3640 Falstone Road
Richmond Virginia 23234(US)

(72) Inventor: Stultz, Edward Blake
1217 Rock Falls Trace
Louisville Kentucky 40223(US)

(74) Representative: Lloyd, Barry George William et al,
Reddie & Grose 16 Theobalds Road
London WC1X 8PL(GB)

(54) Beam splitter.

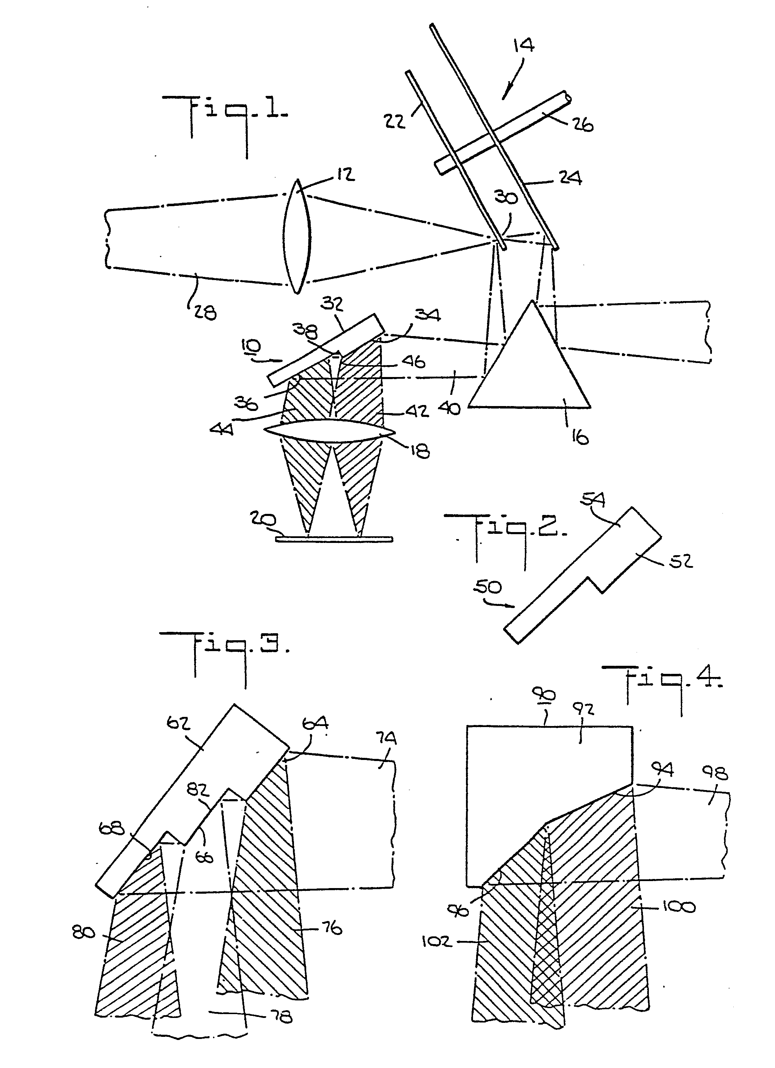

(57) Two or more reflective facets (34, 36) are so disposed relative to each other as to intercept different spatial portions of the cross-section of an incident light beam (40) and to direct each portion toward a different target area. As shown in Figure 1 the facets lie in parallel, spaced-apart planes defined by a step-like surface of a solid body, and in use are oriented in such a manner relative to an incident beam that all of the energy of the incident beam is reflected by the surface. In another alternative the facets are contiguous reflective surfaces of a solid body and are inclined relative to each other to direct the respective portions of an incident beam in different directions.

Fig. 1.

EP 0 098 048 A1

## BEAM SPLITTER

The present invention pertains generally to a beam splitter of a type well suited to many applications. By way of illustration only, the beam splitter of the invention is described herein with reference to use with apparatus for providing two or more parallel rows of uniformly spaced similar perforations in a moving web by means of light energy, and more particularly with an apparatus for forming rows of perforations in a moving web of cigarette tipping paper.

The filter tips of certain types of cigarettes are customarily provided with one or more circumferential rows of perforations. For aesthetic reasons it is very important that, if two or more rows of perforations are provided, the rows be spaced a constant distance apart at all points around the circumference of the filter.

The powerful beams of light provided by lasers are often used to form the perforations. One type of apparatus used for making such holes in tipping paper employs one laser for each row of perforations. The paper web is moved longitudinally past each laser in turn, each laser being aimed at a different portion of the width of the web. As the web moves, the output of each laser is pulsed, for example, by means of periodically reactivating and deactivating each laser or by means of a beam chopper or other shutter arrangement.

This type of apparatus has the drawback that the paper web, which moves very rapidly, frequently shifts slightly in a direction transverse to its movement. Since the lasers are stationary, this results in the spacing between the rows of holes varying somewhat. Although the amount of variation is not great, it is sufficient to be visible, and detracts from the aesthetic quality of the cigarettes made with the tipping paper. It would be desirable to have a system capable of providing two or more exactly evenly spaced rows of perforations in a web of cigarette tipping paper.

Another type of apparatus employs one or more rotating discs mounted to rotate in alignment with each other in parallel planes, at an angle to the beam produced by the laser. A system of this type, having only one disc, is disclosed in our European patent application No 81303855.1 (Serial No 0047604          ) "Multiple Optical Beam Generation and Redirection System". Each disc is provided with a pattern of transmissive portions and reflective facets arranged around its circumference. The discs are so aligned with each other that if a laser beam is directed at the discs in the proper direction, it will, depending on the rotational position of the discs relative to the light source, either be reflected from the first disc, or pass through the first disc and be reflected from the second, or pass through the first two and be reflected from the third, etc, or pass through all the discs.

The discs are rotated in synchronization with each other in such a manner that as they rotate, the beam follows each of the above paths in sequence. After the beam has been reflected from one of the discs or has passed through all of them, as the case may be, it is directed by additional optics, preferably by reflection, toward a respective transverse location on the web to form a perforation. Each of the reflected beams thus forms one row of holes, one hole being formed in each row each time the laser beam is scanned across the width of the web by the disc or discs and the additional optics.

In the system described in the application referred to above, the additional optics include a respective mirror corresponding to each of the beam paths, for directing the beam to a respective target location on the web. For each of these mirrors (hereinafter called the "fixed mirrors"), an additional, movable mirror is also provided. While maintained parallel to its respective fixed mirror, each of the movable mirrors is inserted part of the way into the path followed by the laser beam from the disc assembly to the respective fixed mirror so as to intercept a portion of the cross-section of the beam and direct it toward a location on the web distinct from that to which the corresponding fixed mirror detects the beam. Since each movable mirror is parallel to the corresponding fixed mirror, the beam reflected from each movable mirror is paralle to that reflected from the corresponding fixed mirror.-

This arrangement, although doubling the number of rows of perforations that can be made with a given number of discs, has been found to present certain practical problems. First, since each mirror has its own mounting, it is not possible to place the movable mirrors less than a certain minimum distance from the corresponding fixed mirror because of the space required for the two mirror mountings. This prevents using the two split-off beams produced by each fixed mirror and the corresponding movable mirror to form holes less than that minimum distance apart, unless additional optics are provided.

Second, it is very difficult to cool the movable mirrors satisfactorily. As is well known, an optical element (mirror or lens) on which a high-power beam of radiation, such as a high-power laser beam, impinges must be cooled to prevent distortion of the element's optical characteristics due to the absorption of even relatively small amounts of energy from the incident beam. The conventional method of cooling such an element is to surround its circumference with a cooling jacket or the like. It is important that the jacket be in contact with substantially the entire circumference of the element, since the uneven cooling that would otherwise result would produce hot spots and mechanical stresses in the element, distorting its optical characteristics.

It will be apparent, however, that a circumferential cooling jacket cannot be used with the movable mirrors in the arrangement disclosed in the cited application, since one portion of such a cooling jacket would necessarily be in the path of the laser beam and would therefore prevent some of the beam from reaching its intended destination (the web, via the corresponding fixed mirror).

Third, since each fixed mirror would be supported by a separate mounting from that bearing the corresponding intercepting mirror, vibrations caused by the operation of the perforating system might make the mirrors vibrate relative to each other, resulting in aesthetically unacceptable variations in the spacing between the corresponding adjacent rows of perforations in the paper web.

It would be desirable to have a wholly reflective beam splitter exempt from the difficulties encountered with the combination of fixed and moved mirrors described above.

According to the present invention, there is provided an apparatus for splitting a beam of light, comprising a solid body having a plurality of reflective elements in fixed relative positions and orientations, so as, in use, to reflect a respective portion of a light beam simultaneously incident on all of said reflective elements, along a respective path, at least two said paths being at an angle of not more than 90° to each other.

Preferably, the beam splitter comprises two or more stationary, entirely reflective, i.e. non-transmissive, facets permanently secured to each other and so disposed relative to each other that they intercept the entire cross-section of an incident light beam. Each of the facets intercepts a different spatial portion of the cross-section of the incident beam and directs it toward a different target area, which may, in one application, be a location on a moving web where a perforation is to be formed. Preferably, the facets are arranged to direct the reflected beams to locations arranged along a single straight line which, if the target areas are locations on a moving web, are transverse to the direction of movement of the web.

In one preferred embodiment, the facets are planar portions of a step-like surface defined by a solid body, the facets lying in parallel, spaced-apart planes. In this embodiment the reflected beams are directed along substantially parallel paths. Alternatively, the facets may be non-planar, to provide some degree of focusing, while nonetheless being oriented to direct the reflected beams along parallel paths.

According to another preferred embodiment, the reflective facets are contiguous, non-parallel portions of the surface of a solid body that define an obtuse angle between them.

Figure 1 is a side view of a first preferred embodiment of the beam splitter of the invention.

Figures 2 and 3 are side views of variations of the embodiment of Figure 1.

Figure 4 is a side view of another preferred embodiment of the beam splitter of the invention.

Figure 1 shows schematically, by way of illustration only, one of many systems in which the first preferred embodiment 10 of the invention could be employed. As shown, the illustrative web-perforating system includes the stationary beam splitter 10 of the invention, an initial focusing lens 12, a rotary beam chopper 14, a prism 16, a final focusing lens 18 and a moving web 20 of tipping paper or the like in which perforations are to be formed. In the embodiment of Figure 1, four parallel rows of perforations are to be made.

The rotary beam chopper 14 includes two reflective discs 22, 24 mounted coaxially on a shaft 26. Disc 22 has a pattern of transmissive portions and reflective portions about its circumference. A slightly divergent laser beam 28 is focused by lens 12 on disc 22, which, as it rotates, alternately reflects the focused beam to one face of the prism 16 and transmits it to disc 24. The latter disc 24 reflects the beam to a second face of the prism 16 to be directed to a second beam splitter (not shown) identical to the illustrated beam splitter 10. The prism 16 is so placed as to equalize the path lengths of the beam from the point 30 where it is narrowest to the two beam splitters.

In the embodiment of Figure 1, the stationary beam splitter 10 comprises a solid body 32 having two parallel, spaced-apart reflective planar facets 34, 36 defined on one side of the body 32. The facets 34, 36 can be made reflective either by depositing a reflective substance on the body 32 or by making the body 32 itself of a reflective material. Preferably, the facets 34, 36 define a step-like structure on the side of body 32, as shown, the facets 34, 36 being spaced apart by an intermediate surface 38 perpendicular to both facets 34, 36. The beam splitter 10 is supported by a conventional mounting (not shown) and cooled by a conventional circumferential cooling jacket (whose position is indicated by the broken lines in Figure 1).

When the beam 40 of light reflected from the first face of the prism 16 impinges on facets 34, 36, each facet 34, 36 reflects the portion of the beam 40 incident thereon toward the web 20, which is continuously in motion along its length, which in Figure 1 lies in a plane perpendicular to that of the figure. Since the facets 34, 36 are parallel, the beams 42, 44 reflected from them are also parallel, but because the facets 34, 36 lie in spaced apart planes, beams 42 and 44 are also spaced apart from each other. In this manner the beam 40 is split into two separate beams 42 and 44.

Lens 18 focuses the reflected beams 42 and 44 on the paper web 20 at the desired locations. Because beams 42 and 44 are derived from the same beam 40, they are focused in the same plane by lens 18, so that a single lens suffices to focus both at the desired locations on the web 20. (It should be noted that the reflected beams 42 and 44 can be made sufficiently close together to pass through the same lens 18 only because facets 34 and 36 lie in planes that are very close together. This in turn is possible only because facets 34 and 36 are defined by portions of the surface of a single body 32, instead of requiring separate mounts).

The two facets 34, 36 are sufficiently large and are so oriented relative to the beam 40 that the entire cross-section of the beam 40 impinges on one or the other of them. Thus, no energy is wasted. If the reflective facets 34, 36 were mounted separately, so as to require separate cooling jackets, the cooling jacket of the upper facet 34 would intercept part of the beam 40, wasting the energy of that part. If, alternatively, facets 34, 36 were mounted separately and provided with separate cooling jackets, but the cooling jacket of the upper facet were in contact with only a portion of the perimeter of that facet so as not to interrupt the beam, the upper facet would not be evenly cooled, and would, as a result, be subject to internal stresses.

By ensuring that the lower edge 46 of the upper facet 34 lies on a diameter of the circular beam 40, one ensures that the reflected beams 42 and 44 have the same power (assuming that the beam 40 is symmetric about its axis in radiation density). This guarantees that the holes of both rows are uniform in size. If the beam 40 is not symmetric about its axis, the asymmetry can be compensated for by directing the center of the beam 40 slightly above or below the bottom edge 46 of the upper facet 34 in such a manner that one-half the power of the beam 40 impinges on each facet 34, 36.

Figure 2 shows a variation of the beam splitter 10 shown in Figure 1. While the off-set reflective facets 34 and 36 of beam splitter 10 of Figure 1 are defined by the surface of a unitary solid body 32, the embodiment 50 of Figure 2 comprises a piece 52, having the shape of a rectangular prism, secured to a second piece 54 to form a body having the same shape as body 32 of Figure 1. The embodiment shown in Figure 2 is not described in detail, since, except as already stated, it is the same as that of Figure 1.

Figure 3 shows another variation of the embodiment of Figure 1, in which a solid body 62 is provided with three planar facets 64, 66, 68 lying in respective parallel, spaced-apart planes and joined to each other by intermediate perpendicular surfaces 70, 72, respectively. In this embodiment 60, as in that of Figure 1, different parts of the cross-section of an incident beam 74 impinge on the three facets 64, 66, 68 and are reflected by them toward three spaced targets, for example, three spaced locations on a web of paper (not shown). A convergent lens (not shown) focuses the three reflected beams 76, 78, and 80 on the web. As in Figure 1, a single lens focus all three reflected beams 76, 78, 80 in one plane.

As is well known, the radiation density in a typical laser beam is not uniform over the cross-section thereof, but varies with distance from the center of the beam according to a normal distribution, the highest value of the radiation density occurring at the center of the beam and the lowest at the periphery. In order to ensure that the reflected beams are of equal power, it is sufficient in the case of the embodiment of Figure 1 to place the lower edge 56 of the upper facet 34 on a diameter of the incident laser beam 40, as already stated. In the case of the embodiment of Figure 3, however, an imaginary line 82 parallel to the direction of movement of the web and bisecting the surface of the middle reflective facet 66 must be made to coincide with a diameter of the incident beam 74.

However, while equal division of the beam by the embodiment of Figure 1 is guaranteed for most cases by making the areas of the two facets 34, 46 equal (since the radiation density distribution in the laser beam 40 is usually symmetric about the longitudinal axis of the beam), it will be appreciated that because the radiation density follows a normal distribution rather than being uniform throughout the cross-section of the beam, the upper and lower facets 64 and 68, respectively, in the embodiment of Figure 3 receive radiation whose density is lower on the average than that received by the central facet 66. Accordingly, the area of facet 64, 68 must be grater than that of the central facet 66.

Generally, as the number of reflective facets of the beam splitter increases, the difficulty of obtaining beams of equal intensity using a plurality of mirrors in the manner described in the co-pending application cited above increases tremendously, because the exact position of each mirror relative to the others must be adjusted separately and must be precisely correct. With the beam splitter of the invention, in contrast, no such adjustments are ever necessary once the beam splitter is manufactured. As a result, far greater uniformity of beam intensity can be obtained with the beam splitter of the invention than with a plurality of separate mirrors, and the degree of this superiority increases quickly with the number of reflective facets to be used.

Although the radiation density distribution in a laser beam is ordinarily symmetric about the axis thereof, asymmetric modes sometimes occur in the beam,

·causing the radiation density distributtion to depart slightly from its usual symmetry. When the embodiment of Figure 1 is used, this problem can be corrected simply by adjusting the position of the beam splitter 10 of the invention relative to the incident beam 40 a sufficient amount to ensure that equal amounts of radiation are falling on each of the two facets 34, 36. When more than two facets are used, exact compensation for such asymmetry will in general not be possible, and only an approximation can be achieved. Such approximation, however, is believed to be possible within acceptable limits for practical purposes.

Figure 4 shows another embodiment 90 of the beam splitter of the invention, in which a solid body 92 is provided with two contiguous reflective facets 94, 96. The facets 94, 96 are preferably planar, although as in the embodiments of Figures 1-3 they might if preferred be curved in order to provide some degree of focusing. In any event, the facets 94, 96 are oriented at an obtuse angle to each other, so that the portions of the incident beam 98 that strike the facets 94, 96 are reflected in different directions. A focusing lens (not shown) can be used as with the embodiments of Figures 1-3 to direct the reflected beams 100, 102 to the desired target locations.

The arrangements described thus provide a simple, efficient beam splitter which is free of the cooling, spacing and vibration problems described above. It has a plurality of stationary reflective surfaces that together intercept the entire cross-section of the beam and split it without any loss of the beam's power, and can be used in conjunction with a beam of light to form perforations in a moving web, so that it is possible to form two or more collinear holes simultaneously with fixed spacings between them. Moreover, the beam splitter can be easily adjusted to produce split-off beams of equal power.

## CLAIMS

1. An apparatus for splitting a beam of light, comprising a solid body having a plurality of reflective elements in fixed relative positions and orientations, so as, in use, to reflect a respective portion of a light beam simultaneously incident on all of said reflective elements, along a respective path, at least two said paths being at an angle of not more than 90° to each other.

2. An apparatus according to claim 1, characterised in that the said paths are substantially parallel.

3. An apparatus according to claim 1, characterised in that the said reflective elements are planar.

4. An apparatus according to claim 3, characterised in that said reflective elements are disposed in respective parallel, spaced-apart planes.

5. An apparatus according to claim 2, 3 or 4, characterised in that said solid body has a plurality of parallel faces, each said reflective element being defined by a respective said face.

6. An apparatus according to claim 1, characterised in that at least two of said paths intersect.

7. An apparatus according to claim 6, characterised in that each said reflective element is contiguous with another said reflective element.

8. An apparatus according to claim 7, characterised in that said reflective elements are planar.

9. An apparatus according to claim 1, characterised in that said reflective elements comprise non-planar surfaces for providing focussing.

**European Patent Office**

**EUROPEAN SEARCH REPORT**

EP 83303062.0

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int Cl. ³) |
| X | US - A - 4 087 162 (KUFFER) <br> * Fig. 3,4 * <br> -- | 1-5 | G 02 B 27/14 // <br> A 24 C 5/60 |
| X | CH - A5 - 608 626 (VEB ZEISS) <br> * Page 2, column 2, line 24 - page 3, column 1, line 2; fig. 1-3 * | 1-4 | |
| A | | 7,8 | |
| | -- | | |
| X | DE - A1 - 3 039 496 (COULTER) <br> * Fig. 1; page 12, line 18 - page 13, line 23 * | 1,6,7 | |
| A | -- | 9 | |
| A,D | EP - A1 - 0 047 604 (PHILIP) <br> * Fig. * <br> -- | | TECHNICAL FIELDS SEARCHED (Int. Cl ³) |
| A | EP - A1 - 0 021 165 (PHILIP) <br> * Fig. 1-3 * <br> -- | | G 02 B 5/00 <br> G 02 B 17/00 <br> G 02 B 27/00 |
| A | US - A - 4 265 254 (KOCH) <br> * Fig. 3-5 * <br> ---- | | A 24 C 5/00 <br> B 23 K 26/00 |

The present search report has been drawn up for all claims

| Place of search <br> VIENNA | Date of completion of the search <br> 23-09-1983 | Examiner <br> GRONAU |
|---|---|---|